# EUROPEAN PATENT SPECIFICATION

(11) **EP 3 534 471 B1**
(45) Date of publication and mention of the grant of the patent: **24.03.2021**
(21) Application number: 16920367.6
(22) Date of filing: 26.10.2016
(51) Int. Cl.: H02B 11/12, H02B 1/36

(54) **CONTROL CENTER INCLUDING A GUIDE RAIL**
MOTORSCHALTSCHRANK MIT FÜHRUNGSSCHIENE
CENTRE DE COMMANDE COMPRENANT UN RAIL DE GUIDAGE

(43) Date of publication of application: 04.09.2019
(73) Proprietor: Mitsubishi Electric Corporation, Chiyoda-ku Tokyo 100-8310 (JP)
(72) Inventor: SEKI, Koichiro, Tokyo 100-8310 (JP); HARADA, Kazuya, Tokyo 100-8310 (JP); OHARA, Masato, Tokyo 100-8310 (JP)
(74) Representative: Witte, Weller & Partner Patentanwälte mbB
(86) International application number: PCT/JP2016/081705
(87) International publication number: WO 2018/078739

(56) References cited:
- JP-U- S55 117 115
- JP-U- S58 174 912
- KR-A- 20150 011 130
- US-A- 4 831 489

## Description

### TECHNICAL FIELD

The present invention relates to a control center such as a switchboard that stores a plurality of functional units, and particularly relates to a guide rail for attaching and removing each of the functional units to and from a functional unit compartment in a case.

### BACKGROUND ART

In general, a control center such as a switchboard used, for example, in an electric power facility or a plant facility stores a plurality of functional units, and is structured to compartmentalize the functional units using partition plates, and to allow each of the functional units to be attached/removed and held.

In the conventional control centers, a guide rail member is attached to both sides of a frame case located in a functional unit compartment. In addition, guide pieces are attached to each functional unit. The guide pieces are engaged with each guide rail member, and are guided by the guide rail member so as to allow the functional unit to be attached/removed and held. Each guide rail member is disposed, for example, in the vicinity of the lower side of the corresponding partition plate, and each guide piece is disposed on the upper side of the corresponding functional unit, thus allowing the functional unit to be attached/removed and held in a suspended state (see e.g., Patent Document 1).

Patent Document 2, according to its abstract, relates to a motor control board, and more specifically, to a motor control board which is a device to collectively assemble and contain a unit device equipped with a circuit closed and monitoring control device or the like in every circuit in a case. The motor control board includes: a bottom plate which is formed and installed on the lower side of a unit device box to be formed inside the case, and supports the unit device; a fixing plate which is formed on the lower side of the bottom plate to face the bottom plate and fixed on the case; and a transfer member which is located between the bottom plate and the fixing plate and inserts and extracts the unit device box through a reciprocating action in a sliding method. The unit device, which is extracted and inserted within the motor control board, is extracted and inserted through a transfer device to be smoothly slid so as to obtain an effect that a worker performs work conveniently and rapidly. Patent document 2 discloses the features of the preamble of claim 1.

Patent Document 3, according to its abstract, relates to a control unit withdrawing mechanism for metal-clad switchgears in which control units each including power load controlling equipments are withdrawably enclosed in unit compartments respectively for movement between connection and test positions. The mechanism includes a locking lever for locking the control unit to the connection and test positions when turned, a positioning aperture formed in the bottom wall of the unit compartment, and an engagement strip moved within the positioning aperture when the control unit is moved within the unit compartment and limiting the movement of the control unit to the section between the connection and test positions. The engagement strip is rotatably mounted on a rotation shaft secured to the control unit so as to be moved together with the locking lever in a predetermined section so as to enter and withdraw from the positioning aperture. Subsequently, the engagement strip further moves due to gravity in spite that the movement of the locking lever is stopped. The maximum rotational operation angle of the locking lever may be limited to about 180 DEG while the engagement strip is moved by about 360 DEG.

### CITATION LIST

### PATENT DOCUMENTS

Patent Document 1: Japanese Laid-Open Patent Publication No. 2011-211782
Patent Document 2: KR 2015 0011130 A
Patent Document 3: US 4 831 489 A

### SUMMARY OF THE INVENTION

### PROBLEMS TO BE SOLVED BY THE INVENTION

With the conventional control center described in Patent Document 1 above, the guide pieces provided at the upper portions of both side surfaces of the functional unit are engaged with groove-shaped portions of guide rails on the case side, and the functional unit is attached/removed and held in a suspended state, thus inhibiting leftward/rightward movement of the functional unit.

However, since the guide pieces are engaged with the groove-shaped portions while being placed on the guide rails, it is not possible to inhibit uplift of the functional unit. In particular, the functional unit is uplifted when a contact element of the functional unit is connected to a bus on the case side. This poses the problem that the functional unit cannot be reliably attached and removed to and from the case.

Furthermore, when the bottom of the functional unit is not planar, a spacer is needed when the functional unit is taken out from the case and horizontally placed outside the case.

The present invention has been made to solve the above-described problems, and the object of the present invention is to provide a control center with a structure of a guide rail that allows a functional unit to be reliably attached and removed to and from a case by inhibiting the movement of the functional unit in the right-left direction and the up-down direction, and enables the functional unit to be horizontally placed outside the case without the need for a spacer.

### SOLUTION TO THE PROBLEMS

Therefore, there is provided a control center according to claim 1.

### EFFECT OF THE INVENTION

With the guide rail according to the present disclosure, when sliding a functional unit on a partition plate forward and backward inside a case, the functional unit can be reliably attached and removed to and from the case by inhibiting movement of the functional unit in the right-left direction and the up-down direction by the rail guide and the slide rail. Furthermore, since the slide rail is provided at the bottom portion of the side plate of the functional unit, the functional unit can be horizontally placed outside the case without the need for a spacer.

The control center according to the present disclosure includes the above-described guide rail, and, therefore, the functional unit can be reliably attached and removed to and from the case, resulting in improved reliability of the control center. Furthermore, since the functional unit can be horizontally placed outside the case without the need for a spacer, the convenience of the control center is also improved.

### BRIEF DESCRIPTION OF THE DRAWINGS

[FIG. 1] FIG. 1 is a perspective view showing a functional unit and side plates thereof, according to an example not part of the present invention.
[FIG. 2] FIG. 2 shows diagrams showing a disk-shaped metal fitting according to the example not part of the present invention.
[FIG. 3] FIG. 3 is a perspective view showing a partition plate according to the example not part of the present invention.
[FIG. 4] FIG. 4 is a perspective view of a switchboard in which partition plates are attached to a case, according to the example not part of the present invention.
[FIG. 5] FIG. 5 is a perspective view for illustrating how the functional unit is slid on the partition plate, according to the example not part of the present invention.
[FIG. 6] FIG. 6 is a front view illustrating engagement between slide rails and disk-shaped metal fittings according to the example not part of the present invention.
[FIG. 7] FIG. 7 is a perspective view showing a front panel and side plates of the functional unit according to the example not part of the present invention.
[FIG. 8] FIG. 8 is a bottom view showing the front panel and the side plates of the functional unit according to the example not part of the present invention.
[FIG. 9] FIG. 9 is a perspective view showing a side plate of a functional unit according to another example not part of the present invention.
[FIG. 10] FIG. 10 is a perspective view showing a bottom plate and side plates of a functional unit according to the present invention.
[FIG. 11] FIG. 11 is a perspective view showing a partition plate according to the present invention.
[FIG. 12] FIG. 12 is a front view illustrating engagement of slide rails and slide pieces with disk-shaped metal fittings according to the present invention.
[FIG. 13] FIG. 13 is a top view in which the bottom plate and the side plates of the functional unit are disposed on the partition plate according to the present invention.

### DESCRIPTION OF EMBODIMENTS

Example not part of the invention In the following, a switchboard as a control center will be described. The switchboard stores a plurality of functional units in a case, and is structured to compartmentalize the functional units using partition plates, and to allow each of the functional unit to be attached/removed and held.

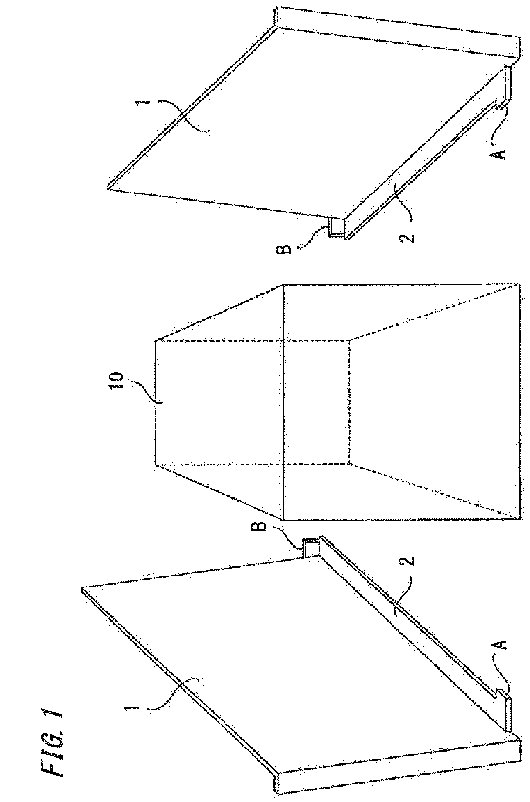

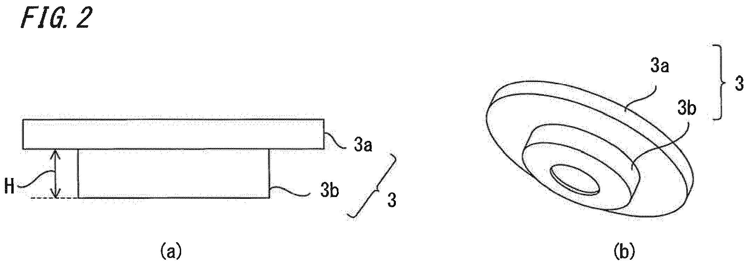

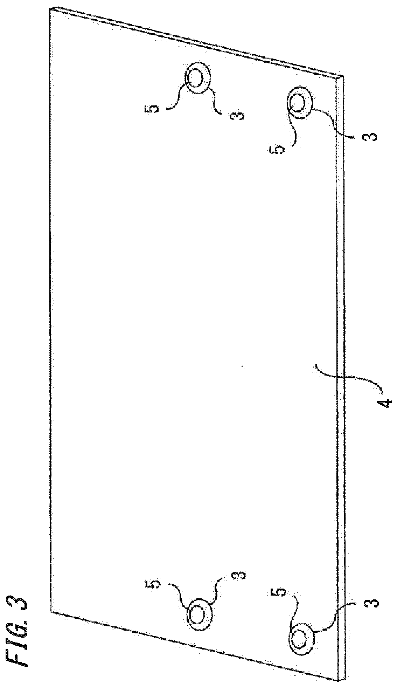

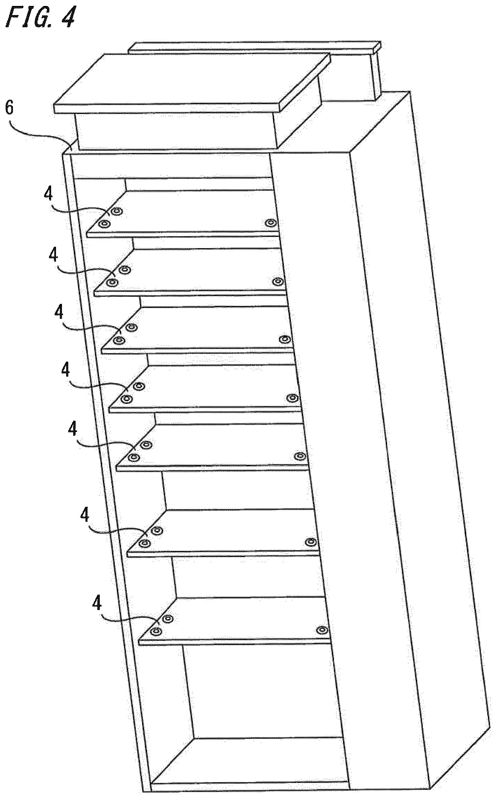

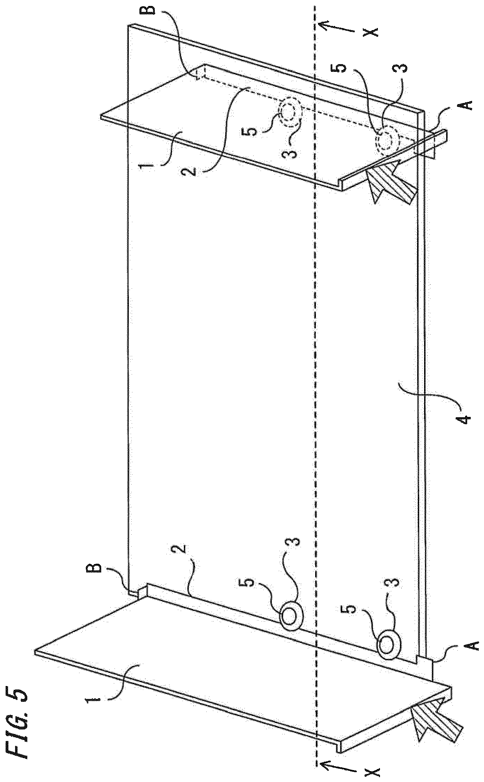

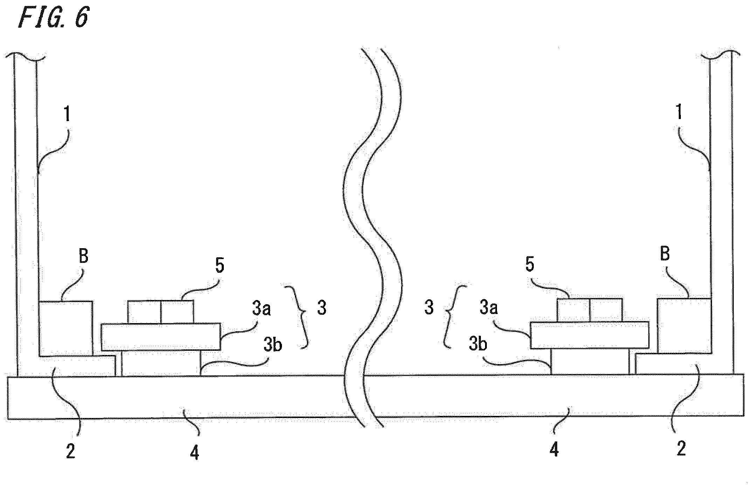

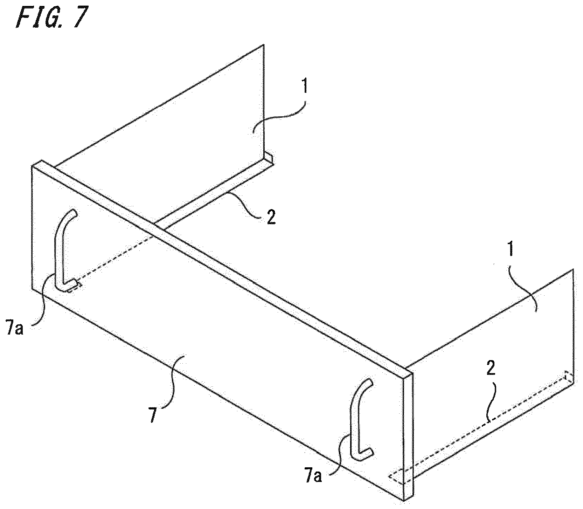

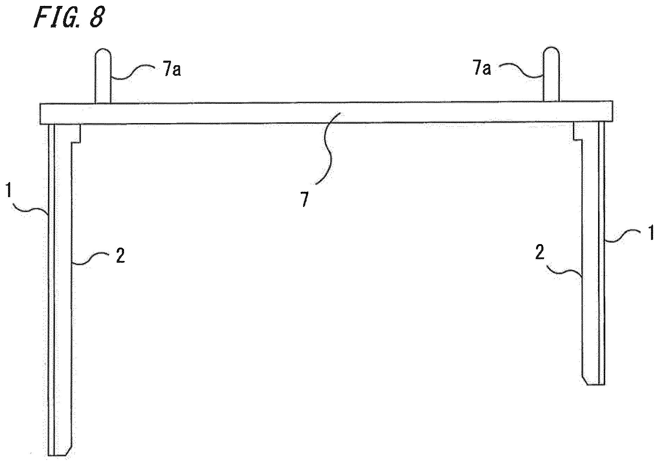

FIGS. 1 to 8 show the switchboard according to the example. FIG. 1 is a perspective view showing a functional unit 10 and side plates 1 thereof, FIG. 2 shows a disk-shaped metal fitting 3 as a button-shaped metal fitting, FIG. 3 is a perspective view showing a partition plate 4, and FIG. 4 is a perspective view of the switchboard in which partition plates 4 have been attached to a case 6. FIG. 5 is a perspective view for illustrating how the functional unit 10 is slid on the partition plate 4, FIG. 6 is a front view illustrating engagement between slide rails 2 and disk-shaped metal fittings 3, FIG. 7 is a perspective view showing a front panel 7 and side plates 1 of the functional unit 10, and FIG. 8 is a bottom view showing the front panel 7 and the side plates 1 of the functional unit 10.

As shown in FIG. 1, the bottom portion of each of the side plates 1 of the functional unit 10 is bent into an L-shape to form the slide rail 2. Each slide rail 2 is provided with a projecting portion A extending in the leftward/rightward direction on the front side, and a projecting portion B extending in the upward direction on the back side. The projecting portions A and B function as stoppers so as to prevent the functional unit 10 from being excessively slid to the back when the functional unit 10 is inserted into the case 6. A grip serving as a contact element with a load bus is to be connected to a side surface of the functional unit 10. For this reason, the length of the right side plate 1 of the functional unit 10 is made smaller so as to ensure a space for connection of the grip at the right back of the functional unit 10.

FIG. 2(a) is a front view of the disk-shaped metal fitting 3, and FIG. 2(b) is a perspective view of the disk-shaped metal fitting 3. As shown in FIG. 2, the disk-shaped metal fitting 3 has a two-stage structure including an upper-stage portion 3a and a lower-stage portion 3b. The diameter of the lower-stage portion 3b is smaller than the diameter of the upper-stage portion 3a, and the height H of the lower-stage portion 3b is slightly larger than the thickness of the slide rail 2. Then, as shown in FIG. 3, a plurality of (in this case, two) disk-shaped metal fittings 3 are attached to the top surface of the partition plate 4 for each of left and right sides of the partition plate 4. An attachment hole is formed in the center of each disk-shaped metal fitting 3, and the disk-shaped metal fitting 3 is attached to the partition plate 4 with a bolt 5.

The guide rail includes a rail guide composed of the plurality of disk-shaped metal fittings 3 attached onto the partition plate 4, and slide rails 2. Then, the partition plate 4 to which the rail guide (disk-shaped metal fittings 3) is attached is attached inside the case 6, as shown in FIG. 4. FIG. 4 shows a state before the functional unit 10 is inserted into the functional unit compartment, which is a space partitioned by the partition plate 4.

To insert the functional unit 10 into the case 6, the functional unit 10 is slid toward the back side, which is the direction indicated by the arrow, while being placed on the partition plate 4, and the functional unit 10 is inserted into the functional unit compartment in the case 6, as shown in FIG. 5. To pull out the functional unit 10 from the case 6, the functional unit 10 is slid on the partition plate 4 toward the front side.

FIG. 6 is a front view as seen from the direction of an arrow X-X in FIG. 5. It is noted that, in FIGS. 5 and 6, the illustration of the inside functional unit 10 sandwiched between the side plates 1 and a front panel 7 described below is omitted.

As shown in FIG. 6, the slide rails 2 and the disk-shaped metal fittings 3 are formed in such dimensions and positions that an end portion of each of the slide rails 2 is sandwiched between the outer circumferential portion of the upper-stage portion 3a of the disk-shaped metal fitting 3 and the partition plate 4. It is noted that, of the plurality of disk-shaped metal fittings 3 disposed for each of the left and right sides of the partition plate 4, the front-most disk-shaped metal fitting 3 is disposed so as to correspond to the position of the projecting portion A of the slide rail 2 at the time of completion of the insertion of the functional unit 10.

Then, when the functional unit 10 is slid, the end portion of the slide rail 2 is slid in a region sandwiched between the outer circumferential portion of the upper-stage portion 3a of the disk-shaped metal fitting 3 and the partition plate 4. That is, the slide rail 2 is engaged with the rail guide (disk-shaped metal fittings 3), and the movements of the slide rail 2 in the right-left direction and the up-down direction are inhibited. At this time, the lower-stage portion 3b of each of the disk-shaped metal fittings 3 serves as a stopper for the slide rail 2 in the right-left direction, and the upper-stage portion 3a of each of the disk-shaped metal fittings 3 serves as a stopper for the slide rail 2 in the upward direction. It is noted that, since the slide rail 2 is slid on the partition plate 4, the movement thereof in the downward direction is prevented by the partition plate 4.

When the insertion of the functional unit 10 is completed, the sliding is completed by the front-side projecting portion A of the slide rail 2 coming into contact with the lower-stage portion 3b of the disk-shaped metal fitting 3, thus allowing the functional unit 10 to be stored at a predetermined position inside the case 6.

As shown in FIGS. 7 and 8, the functional unit 10 is provided with a front panel 7, and the above-described insertion of the functional unit 10 into the case 6 is performed using handles 7a provided on the front panel 7.

The bottom surfaces of the left and right slide rails 2 and the bottom surface of the front panel 7 are formed to be flush with each other, and the bottom surfaces of the slide rails 2 and the bottom surface of the front panel 7 are slid on the partition plate 4 while being in contact with the surface of the partition plate 4 at the time of insertion and drawing of the functional unit 10 into and from the case 6. When the functional unit 10 is placed outside the case 6, after being taken out from the case 6, the functional unit 10 can be supported by the bottom surfaces of the slide rails 2 and the bottom surface of the front panel 7, and thus can be horizontally placed without the need for a spacer.

It is noted that the front panel 7 may be formed at a height at which the bottom portion thereof does not reach the slide rails 2, and the functional unit 10 can be supported by the bottom surfaces of the left and right slide rails 2 when the functional unit 10 is taken out from the case 6 and placed outside.

As described above, the guide rail for sliding the functional unit 10 on the partition plate 4 forward and backward inside the case 6 is formed by the slide rail 2 provided on the bottom portion of each of the side plates 1 and the rail guide composed of the plurality of disk-shaped metal fittings 3 attached onto the partition plate 4. The rail guide includes a plurality of disk-shaped metal fittings 3 for each of the left and right sides of the partition plate 4, and is engaged with the slide rails 2 so as to serve as a stopper for the slide rails 2 in the right-left direction and the upward direction when the functional unit 10 is slid.

Accordingly, the movements of the functional unit 10 in the right-left direction and the up-down direction are inhibited when the functional unit 10 is slid on the partition plate 4 forward and backward inside the case 6, and the functional unit 10 is prevented from being uplifted when the grip is connected to the functional unit 10, thus allowing the functional unit 10 to be reliably attached/removed and held with respect to the case 6. This also improves the reliability of the switchboard.

Since the slide rail 2 is provided on the bottom portion of each of the side plates of the functional unit 10, the functional unit 10 can be horizontally placed outside the case in a stable manner without the need for a spacer, resulting in improved convenience.

Furthermore, since the rail guide is formed by attaching the small disk-shaped metal fittings 3 to the partition plate 4, the guide rail can be easily formed at a low cost.

Since the slide rail 2 is formed by bending the bottom portion of the side plate 1, the guide rail can be more easily formed at a lower cost.

Each of the disk-shaped metal fittings 3 of the rail guide has a two-stage structure in which the diameter of the lower-stage portion 3b is smaller than the diameter of the upper-stage portion 3a, and the height of the lower-stage portion 3b is larger than the thickness of the slide rail 2, so that the lower-stage portion 3b serves as a stopper for the slide rail in the right-left direction, and the upper-stage portion 3a serves as a stopper for the slide rail 2 in the upward direction. Accordingly, the rail guide that is engaged with the slide rail 2 so as to serve as the stopper for the slide rail 2 in the right-left direction and the upward direction can be easily and reliably obtained.

It is noted that each of the disk-shaped metal fittings 3 of the rail guide may be a button-shaped metal fitting having a shape such as a polygonal shape other than a disk shape, whereby the same effect can be obtained.

In the above described example the right side plate 1 of the functional unit 10 has a larger length. However, the embodiment can be applied to the case where left and right side plates 1 have an equal length, and also in this case, the same effect can be obtained.

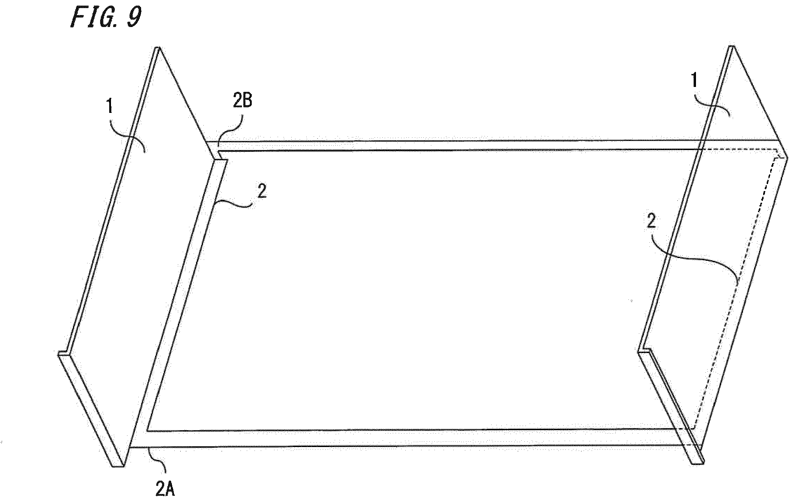

As shown in FIG. 9, left and right side plates 1 having an equal length that are coupled together on the front side and the back side may be used, whereby the same effect can be obtained.

As shown in FIG. 9, the slide rails 2 of the left and right side plates 1 are connected with a coupling portion 2A provided on the front side and a coupling portion 2B provided on the back side. The coupling portion 2B on the back side is formed perpendicularly to the slide rail 2. In this case, the coupling portions 2A and 2B function as a stopper and prevent the functional unit 10 from being excessively slid to the back when the functional unit 10 is inserted into the case 6.

### Embodiment of the invention

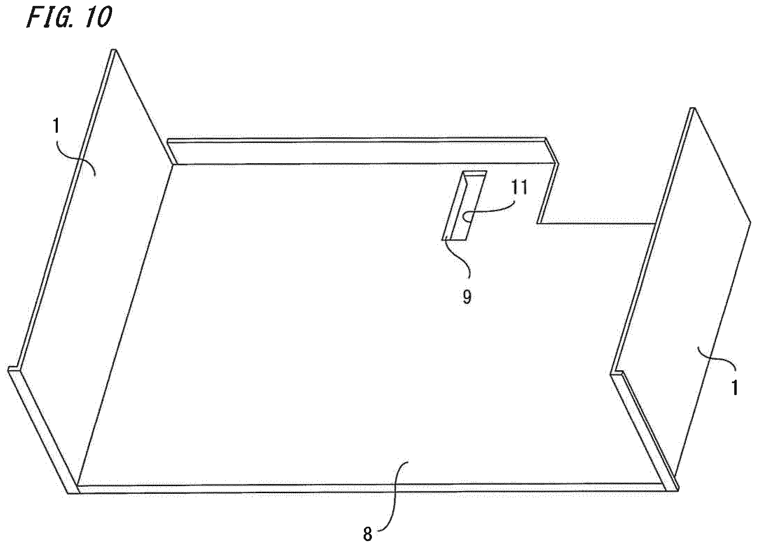

Next, a switchboard as a control center and a guide rail according to the present invention will be described with reference to FIGS. 10 to 13.

Usually, a functional unit 10 of the switchboard includes a bottom plate for attaching a plurality of devices such as a circuit breaker and an electromagnetic switch. In the embodiment, the guide rail includes slide rails 2 and a plurality of disk-shaped metal fittings 3 that are the same as those of the example and further includes a slide piece provided on the bottom plate of the functional unit 10, and guide pieces that are engaged with the slide piece. The rest of the structure of the switchboard is the same as that of the example.

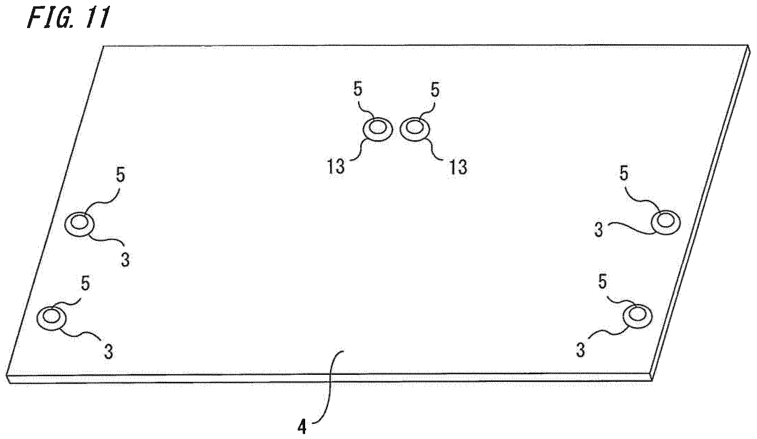

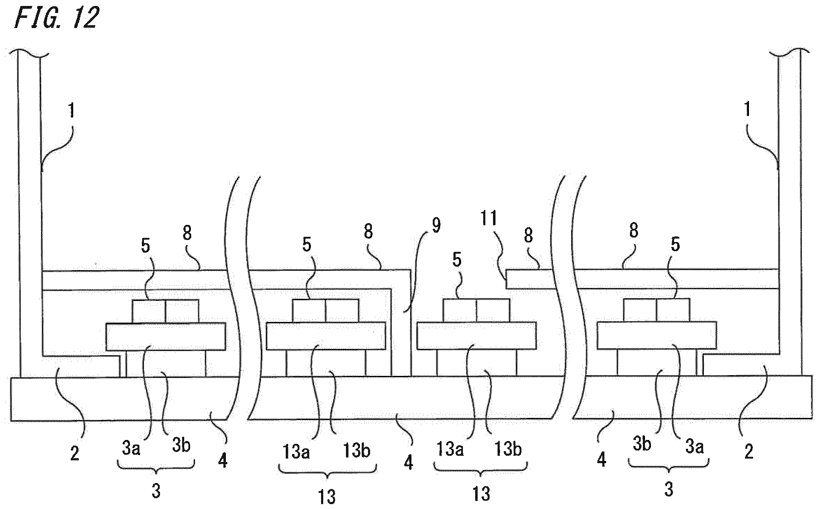

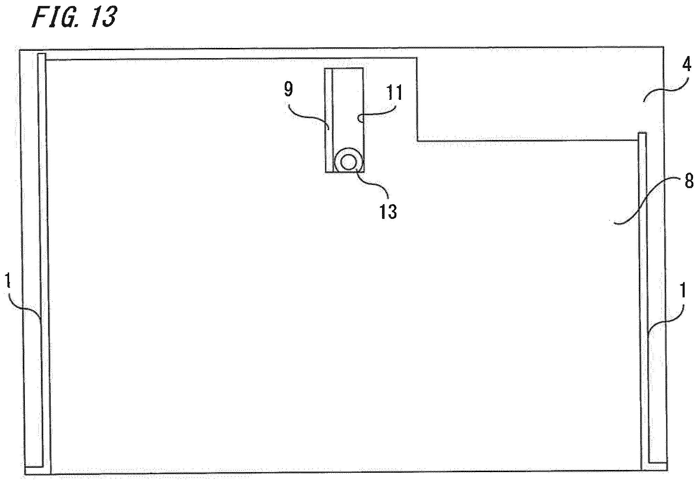

FIG. 10 is a perspective view showing a bottom plate 8 and side plates 1 of the functional unit 10, FIG. 11 is a perspective view showing a partition plate 4, FIG. 12 is a front view illustrating engagement of slide rails 2 and a slide piece 9 with disk-shaped metal fittings 3 and 13 serving as a rail guide, and FIG. 13 is a top view in which the bottom plate 8 and the side plates 1 of the functional unit 10 are disposed on the partition plate 4.

As shown in FIG. 10, a central portion on the back side of the bottom plate 8 of the functional unit 10 is cut in a rectangular shape by cutting out three sides, and then bent perpendicularly to the bottom surface, whereby a rectangular slide piece 9 having long sides extending in parallel to the sliding direction of the functional unit 10 is formed on the rear surface of the bottom plate 8. At the same time, an opening 11 is formed in the bottom plate 8. In addition, the bottom plate 8 has a cut-out portion formed at the right back portion thereof in order to create a space for connecting a grip to the functional unit 10.

As shown in FIG. 11, the partition plate 4 that is attached to the case 6 is provided with disk-shaped metal fittings 3 that are engaged with the slide rails 2, and disk-shaped metal fittings 13 serving as guide pieces that are engaged with the slide pieces 9. As the plurality of disk-shaped metal fittings 3 that are engaged with the slide rails 2, a plurality of (in this case, two) disk-shaped metal fittings 3 are provided for each of the left and right sides of the partition plate 4 as in Embodiment 1. Then, two disk-shaped metal fittings 13 that are engaged with the slide piece are provided at positions that sandwich the slide piece 9 at the central portion on the back side of the partition plate 4. Each of the disk-shaped metal fittings 13 is the same fitting part as the disk-shaped metal fitting 3, and is composed of an upper-stage portion 13a and a lower-stage portion 13b. The disk-shaped metal fittings 3 and 13 are attached to the top surface of the partition plate 4 using bolts 5.

In the present embodiment, a rail guide is formed by the disk-shaped metal fittings 3 and 13 provided on the partition plate 4, and the rail guide, together with the slide rail 2 and the slide piece 9, form a guide rail.

To insert the functional unit 10 into the case 6, the functional unit 10 is slid toward the back while being placed on the partition plate 4, and the functional unit 10 is inserted into the functional unit compartment inside the case 6, as in the example. To pull out the functional unit 10 from the case 6, the functional unit 10 is slid toward the front on the partition plate 4.

As shown in FIG. 12, when the functional unit 10 is slid, an end portion of each of the slide rails 2 is slid in a region sandwiched between the outer circumferential portion of the upper-stage portion 3a of the disk-shaped metal fitting 3 and the partition plate 4. That is, each of the slide rails 2 is engaged with the rail guide (disk-shaped metal fittings 3), and the movements of the slide rail 2 in the right-left direction and the up-down direction are inhibited. Then, prior to completion of the insertion of the functional unit 10, the slide piece 9 passes between the two disk-shaped metal fittings 13 serving as the guide pieces. At this time, the two disk-shaped metal fittings 13 serve as a stopper for the slide piece in the right-left direction, and the movements of the functional unit 10 in the right-left direction are further inhibited. Thereafter, the insertion of the functional unit 10 is completed while the slide piece 9 is being sandwiched between the left and right disk-shaped metal fittings 13, as shown in FIG. 13.

In the present embodiment, the slide piece 9 and the disk-shaped metal fittings 13 are further provided in addition to the slide rails 2 and the disk-shaped metal fittings 3, so that the functional unit 10 can be attached/removed and held with respect to the case 6 more reliably. In particular, on the back side of the functional unit 10, a high positional accuracy is required for connection of the grip. The required positional accuracy can be satisfied since the slide piece 9 and the disk-shaped metal fittings 13 are provided on the bottom plate 8 and the central portion on the back side of the partition plate 4.

In this case as well, the slide rail 2 is provided on the bottom portion of each of the side plates of the functional unit 10, so that the functional unit 10 can be horizontally placed outside the case in a stable manner without the need for a spacer, resulting in improved convenience.

Since the present embodiment uses the disk-shaped metal fittings 13 as the guide pieces that are engaged with the slide piece 9, the whole of the rail guide can be formed using the same fittings (disk-shaped metal fittings 3 and 13), so that the rail guide can be easily formed at a low cost. Furthermore, the slide piece 9 is formed by cutting out and bending a part of the bottom plate 8, and thus can be easily formed at a low cost.

It is noted that the guide pieces do not necessarily have a two-stage structure. Small fittings other than the disk-shaped metal fittings 13 can be used as the guide pieces, and any number of fittings may be used as long as the same number of fittings are provided at the left and the right.

Furthermore, the slide piece 9 may be formed by attaching another member to the rear surface of the bottom plate 8.

This embodiment can also be applied to the case where the left and right side plates 1 have an equal length, as in the example. In that case, the bottom plate 8 is also formed right-left symmetrical without a cut-out portion provided at the right back portion. As shown in FIG. 9, the left and right side plates 1 coupled together by providing the coupling portions 2A and 2B may be used.

The example and the embodiment are applied to a control center including a guide rail, a case 6, a partition plate 4, and a functional unit 10, wherein the functional unit 10 is attached and removed into and from the case 6 by being slid on the partition plate 4 forward and backward in the case 6.

## Claims

1. A control center comprising:
a guide rail;
a case (6);
a partition plate (4) partitioning the case (6) into a plurality of functional unit compartments; and
a functional unit (10),
wherein the functional unit (10) is attachable and removable into and from each functional unit compartment inside the case (6) by being slid on the partition plate (4) forward and backward inside the case (6)
wherein the guide rail comprises:
a rail guide attached to a top surface of the partition plate (4); and
two slide rails (2) respectively provided at a bottom portion of each side plate (1) of the functional unit (10) and for sliding the functional unit (10) on the partition plate (4) forward and backward inside the case (6),
wherein the rail guide includes a plurality of button-shaped metal fittings (3) for each of left and right sides of the partition plate (4) and serves as a stopper for the slide rails (2) in a right-left direction and an upward direction by the button-shaped metal fittings (3) being engaged with the slide rails (2) when the functional unit (10) is slid,
**characterized in that** the guide rail further comprises a rectangular slide piece (9) having long sides extending in parallel to a sliding direction, the slide piece (9) being provided on a rear surface of a central portion on a back side of a bottom plate (8) of the functional unit (10),
the rail guide includes guide pieces (13) at positions sandwiching the slide piece (9) on the top surface of the partition plate (4), and
the guide piece (13) serve as a stopper for the slide piece (9) in the right-left direction.

2. The control center according to claim 1, wherein the slide rail (2) is formed by bending the bottom portion of the side plate (1).

3. The control center according to claim 1 or 2, wherein the button-shaped metal fittings (3) of the rail guide each have a two-stage structure in which a diameter of a lower-stage portion (3b) is smaller than a diameter of an upper-stage portion (3a), a height of the lower-stage portion (3b) is larger than a thickness of the slide rail (2), the lower-stage portion (3b) serves as a stopper for the slide rail (2) in the right-left direction, and the upper-stage portion serves (3a) as a stopper for the slide rail (2) in an upward direction.

4. The control center according to any one of claims 1 to 3, wherein
the slide piece (9) is formed by cutting out and bending a part of the bottom plate (8) of the functional unit (10), and the guide pieces (13) are formed by the same fittings as the button-shaped metal fittings (3).

## Patentansprüche

1. Steuerstand, der aufweist:
eine Führungsschiene;
ein Gehäuse (6);
eine Trennplatte (4), die das Gehäuse (6) in eine Vielzahl von Funktionseinheitenfächer unterteilt; und
eine Funktionseinheit (10),
wobei die Funktionseinheit (10) in jedem Funktionseinheitenfach innerhalb des Gehäuses (6) anbringbar ist und davon entfernbar ist, indem sie auf der Trennplatte (4) nach vorn und hinten innerhalb des Gehäuses (6) geschoben wird,
wobei die Führungsschiene aufweist:
eine Schienenführung, die an einer oberen Fläche der Trennplatte (4) angebracht ist; und
zwei Gleitschienen (2), die jeweils bei einem Bodenabschnitt von jeder Seitenplatte (1) der Funktionseinheit (10) vorgesehen sind und zum Schieben der Funktionseinheit (10) auf der Trennplatte (4) nach vorn und hinten innerhalb des Gehäuses (6),
wobei die Schienenführung eine Vielzahl von knopfförmigen Metallbeschlägen (3) sowohl für eine linke Seite als auch eine rechte Seite der Trennplatte (4) umfasst und als Stoppeinrichtung für die Gleitschienen (2) in einer Rechts-Links-Richtung und in einer Aufwärtsrichtung dient, indem die knopfförmigen Metallbeschläge (3) in die Gleitschienen (2) eingreifen, wenn die Funktionseinheit (10) verschoben wird,
**dadurch gekennzeichnet, dass** die Führungsschiene ferner
ein rechtwinkliges Gleitteil (9) mit langen Seiten aufweist, die sich parallel zur Schieberichtung erstrecken, wobei das Gleitteil (9) an einer hinteren Fläche eines Mittelabschnitts auf einer Rückseite einer Bodenplatte (8) der Funktionseinheit (10) vorgesehen ist,
wobei die Schienenführung Führungsteile (13) in Positionen umfasst, die das Gleitteil (9) zwischen sich auf der oberen Fläche der Trennplatte (4) anordnen, und
wobei das Führungsteil (13) als Stoppeinrichtung für das Gleitteil (9) in der Rechts-Links-Richtung dient.

2. Steuerstand nach Anspruch 1, wobei
die Gleitschiene (2) ausgebildet wird, indem der Bodenabschnitt der Seitenplatte (1) gebogen wird.

3. Steuerstand nach Anspruch 1 oder 2, wobei
die knopfförmigen Metallbeschläge (3) der Schienenführung jeweils eine zweistufige Struktur aufweisen, bei der ein Durchmesser eines Abschnitts (3b) einer unteren Stufe kleiner als ein Durchmesser eines Abschnitts (3a) einer oberen Stufe ist, wobei eine Höhe des Abschnitts (3b) der unteren Stufe größer als eine Dicke der Gleitschiene (2) ist, wobei der Abschnitt (3b) der unteren Stufe als Stoppeinrichtung für die Gleitschiene (2) in der Rechts-Links-Richtung dient und wobei der Abschnitt (3a) der oberen Stufe als Stoppeinrichtung für die Gleitschiene (2) in einer Aufwärtsrichtung dient.

4. Steuerstand nach einem der Ansprüche 1 bis 3, wobei
das Gleitteil (9) ausgebildet wird, indem ein Teil der Bodenplatte (8) der Funktionseinheit (10) ausgeschnitten und gebogen wird, und
die Führungsteile (13) durch die gleichen Beschläge wie die knopfförmigen Metallbeschläge (3) gebildet werden.

## Revendications

1. Centre de commande, comprenant :
un rail-guide ;
un caisson (6) ;
une plaque de séparation (4) séparant le caisson (6) en une pluralité de compartiments pour unité fonctionnelle ; et
une unité fonctionnelle (10),
l'unité fonctionnelle (10) étant susceptible d'être attachée dans chaque compartiment pour unité fonctionnelle à l'intérieur du caisson (6) et d'en être retirée par glissement sur la plaque de séparation (4) vers l'avant et vers l'arrière à l'intérieur du caisson (6),
le rail-guide comprenant :
un guide-rail attaché à une surface de dessus de la plaque de séparation (4) ; et
deux rails glissières (2) respectivement placés au niveau d'une partie de dessous de chaque plaque latérale (1) de l'unité fonctionnelle (10) et destinées à faire glisser l'unité fonctionnelle (10) sur la plaque de séparation (4) vers l'avant et vers l'arrière à l'intérieur du caisson (6),
le guide-rail comportant une pluralité de garnitures en métal en forme de bouton (3) pour chacun de côtés gauche et droit de la plaque de séparation (4) et servant de butée pour les rails glissières (2) dans une direction droite-gauche et une direction montante du fait de la coopération des garnitures en métal en forme de bouton (3) avec les rails glissières (2) lors du glissement de l'unité fonctionnelle (10),
**caractérisé en ce que** le rail-guide comprend en outre une pièce glissière rectangulaire (9) présentant des longs côtés s'étendant parallèlement à une direction de glissement, la pièce glissière (9) étant placée sur une surface arrière d'une partie centrale sur un dos d'une plaque de dessous (8) de l'unité fonctionnelle (10),
le guide-rail comporte des pièces-guides (13) à des positions prenant en sandwich la pièce glissière (9) sur la surface de dessus de la plaque de séparation (4), et
la pièce-guide (13) sert de butée pour la pièce glissière (9) dans la direction droite-gauche.

2. Centre de commande selon la revendication 1, dans lequel
le rail glissière (2) est formé par pliage de la partie de dessous de la plaque latérale (1).

3. Centre de commande selon la revendication 1 ou 2, dans lequel
les garnitures en métal en forme de bouton (3) du guide-rail présentent chacune une structure à deux étages dans laquelle un diamètre d'une partie en étage inférieur (3b) est plus petit qu'un diamètre d'une partie en étage supérieur (3a), une hauteur de la partie en étage inférieur (3b) est plus grande qu'une épaisseur du rail glissière (2), la partie en étage inférieur (3b) sert de butée pour le rail glissière (2) dans la direction droite-gauche et la partie en étage supérieur sert (3a) de butée pour le rail glissière (2) dans une direction montante.

4. Centre de commande selon l'une quelconque des revendications 1 à 3, dans lequel
la pièce glissière (9) est formée par découpe et pliage d'une partie de la plaque de dessous (8) de l'unité fonctionnelle (10), et les pièces-guides (13) sont formées par les mêmes garnitures que les garnitures en métal en forme de bouton (3).
